# FASCICULE DE BREVET EUROPEEN

(11) **EP 3 899 221 B1**
(45) Date de publication et mention de la délivrance du brevet: **04.05.2022**
(21) Numéro de dépôt: 20729743.3
(22) Date de dépôt: 01.06.2020
(51) Int. Cl.: F01N 3/20

(54) **DISPOSITIF DE FIXATION POUR MODULE DE DISTRIBUTION DE SOLUTION AQUEUSE CONTENUE DANS UN RESERVOIR A BORD D'UN VEHICULE AUTOMOBILE**
BEFESTIGUNGSVORRICHTUNG FÜR EIN MODUL ZUR ABGABE EINER WÄSSRIGEN LÖSUNG IN EINEM TANK AN BORD EINES KRAFTFAHRZEUGES
ATTACHMENT DEVICE FOR A MODULE FOR DISPENSING AN AQUEOUS SOLUTION CONTAINED IN A TANK ON BOARD A MOTOR VEHICLE

(30) Priorité: 31.05.2019 FR 1905826
(43) Date de publication de la demande: 27.10.2021
(73) Titulaire: Plastic Omnium Advanced Innovation And Research, 1130 Bruxelles (BE)
(72) Inventeur: DHAUSSY, Franck, 1130 BRUXELLES (BE); LEONARD, Stéphane, 1130 BRUXELLES (BE); DUEZ, Laurent, 1130 BRUXELLES (BE); JEANNETEAU, Simon, 1130 BRUXELLES (BE); LECRIVAIN, Franck, 1130 BRUXELLES (BE); SINAULT, Yann, 1130 BRUXELLES (BE)
(74) Mandataire: LLR
(86) Numéro de dépôt international: PCT/EP2020/065111
(87) Numéro de publication internationale: WO 2020/240036

(56) Documents cités:
- EP-A1- 3 263 861
- WO-A1-2012/152498
- WO-A1-2013/087663
- DE-A1-102010 062 982
- US-A1- 2016 265 406
- US-A1- 2019 112 954

## Description

L'invention concerne un dispositif de fixation pour module de distribution de solution aqueuse contenue dans un réservoir à bord d'un véhicule automobile, un module de distribution de solution aqueuse contenue dans un réservoir à bord d'un véhicule automobile comprenant ledit dispositif de fixation et un réservoir de solution aqueuse à bord d'un véhicule comprenant ledit module. Plus particulièrement, l'invention concerne un procédé de fabrication d'un dispositif de fixation pour module de distribution de solution aqueuse contenue dans un réservoir à bord d'un véhicule automobile.

L'invention peut être utilisée notamment dans le domaine de la dépollution des gaz d'échappement de véhicule automobile nécessitant l'utilisation d'une solution d'urée mais également dans le domaine de l'injection d'eau dans le circuit d'admission d'air du moteur d'un véhicule. Dans le cas de l'injection d'eau, cette eau se mélange au gaz d'admission et permet de réduire les températures de combustion et les émissions de polluants appelés NOx, et d'augmenter les performances, par exemple, d'un moteur à essence en diminuant la sensibilité au cliquetis.

La solution d'urée commence à geler lorsque la température descend en dessous de -11°C, en dessous de 0°C pour de l'eau. A cet effet, le système de stockage d'une solution aqueuse pour véhicule automobile comprend dans le réservoir des moyens de chauffage prévus pour éviter le gel de la solution d'urée ou de l'eau, préférentiellement de l'eau déminéralisée.

Toutefois, ces moyens de chauffage sont désactivés lorsque le véhicule est mis à l'arrêt après une période de roulage et, quand le véhicule stationne à l'extérieur dans des conditions externes hivernales sévères, pouvant atteindre par exemple des températures de l'ordre de -40°C, la transformation en glace de la solution d'urée ou de l'eau, préférentiellement de l'eau déminéralisée, contenue dans le réservoir s'amorce et peut conduire à la congélation de la totalité de la solution d'urée ou de l'eau, préférentiellement de l'eau déminéralisée, en quelques dizaines de minutes.

Il est donc indispensable de disposer à l'intérieur du réservoir d'un moyen de chauffage apte à dégeler rapidement l'eau ou l'urée située en proximité du module de distribution de solution aqueuse.

La demande de brevet WO 2008/138960 divulgue un module de distribution de solution aqueuse d'urée comprenant un moyen de chauffage flexible. Un tel chauffeur flexible pose le problème de sa fixation au sein du module, mais également de la fixation dudit module au réservoir, le chauffeur flexible pouvant être endommagé lors du montage du module de distribution de solution aqueuse d'urée au sein du réservoir.

Le document US 9 702 287 B2 divulgue un dispositif de fixation pour module de distribution de solution aqueuse d'urée contenue dans un réservoir à bord d'un véhicule automobile, ledit dispositif de fixation comprenant un moyen de chauffage non flexible, ledit moyen de chauffage étant constitué d'un diffuseur de chaleur comprenant au moins un élément chauffant de type CPT (Coefficient de Température Positif). Le moyen de chauffage non-flexible divulgué dans le document US 9 702 287 B2 est surmoulé d'un matériau plastique en HDPE. Le module de distribution de solution aqueuse d'urée ne comprend pas en tout ou partie l'élément diffuseur de chaleur. Un tel module présente le désavantage de nécessiter un nombre élevé de moyens d'étanchéité entre les différentes parties dudit module et requiert la présence d'un chauffeur additionnel.

L'invention a notamment pour objectif de pallier ces inconvénients de l'art antérieur.

Plus précisément, un objectif de l'invention, dans au moins un de ses modes de réalisation, est de fournir un dispositif de fixation pour module de distribution de solution aqueuse contenue dans un réservoir à bord d'un véhicule automobile nécessitant un nombre réduit d'accessoires au rang desquels des moyens d'étanchéité ou des moyens de chauffage.

L'invention, dans au moins un de ses modes de réalisation, a encore pour objectif de fournir un module de distribution de solution aqueuse contenue dans un réservoir à bord d'un véhicule automobile, mais également un réservoir de solution aqueuse pour véhicule automobile.

Un autre objectif de l'invention, dans au moins un de ses modes de réalisation, est de mettre en oeuvre un procédé de fabrication d'un dispositif de fixation pour module de distribution de solution aqueuse contenue dans un réservoir à bord d'un véhicule automobile.

Conformément, à un mode de réalisation particulier, l'invention concerne un dispositif de fixation pour module de distribution de solution aqueuse contenue dans un réservoir à bord d'un véhicule automobile.

Selon l'invention, un tel dispositif de fixation comprenant un stator de pompe, un moyen de chauffage et un diffuseur de chaleur comprenant une base et une première pluralité de parois sensiblement verticales par rapport à ladite base définissant au moins un premier volume interne, ladite base et/ou au moins une paroi sensiblement verticale par rapport à la base comprenant au moins un moyen de positionnement du stator de pompe et/ou un premier moyen de fixation du stator de pompe et/ou au moins un deuxième moyen de fixation du moyen de chauffage, l'ensemble stator de pompe et diffuseur de chaleur étant surmoulé par un matériau plastique, le dispositif de fixation comprenant au moins un premier trou traversant, préférentiellement au niveau de la base du dispositif de fixation, plus préférentiellement au niveau du diffuseur de chaleur, apte à évacuer la solution aqueuse pompée par la pompe et un deuxième trou traversant apte à alimenter la pompe en solution aqueuse.

Le principe général de l'invention repose sur une optimisation de la diffusion de la chaleur émise par le moyen de chauffage, mais également par le stator de la pompe permettant également une diminution du nombre de moyens d'étanchéité tels que des joints par exemple.

Ainsi, l'invention repose sur une approche tout à fait nouvelle et inventive de réalisation d'un dispositif de fixation pour module de distribution de solution aqueuse contenue dans un réservoir à bord d'un véhicule automobile composé d'un ensemble surmoulé par un matériau plastique comprenant un stator de pompe et d'un diffuseur de chaleur, le dispositif de fixation comprenant au moins un premier trou traversant, préférentiellement au niveau de la base du dispositif de fixation, apte à évacuer l'eau pompée par la pompe, ledit diffuseur de chaleur comprenant au moins un premier moyen de fixation du stator de pompe et/ou au moins un deuxième moyen de fixation du moyen de chauffage.

Par l'expression « une première pluralité de parois sensiblement verticales par rapport à ladite base définissant au moins un premier volume interne », on entend désigner le fait que la base et la première pluralité de parois sensiblement verticales par rapport à la base forment un contour dont la partie supérieure correspond au plan passant par le plus grand nombre de bords supérieurs des parois sensiblement verticales de la première pluralité de parois sensiblement verticales, ledit contour définissant un premier volume interne en combinaison avec la base et la première pluralité de parois sensiblement verticales. Selon une alternative, les bords supérieurs de la pluralité de parois sensiblement verticales par rapport à la base peuvent être reliés entre eux en tout ou partie par un couvercle. Ladite première pluralité de parois sensiblement verticales peut être constituée de parois sensiblement verticales dans la continuité l'une de l'autre ou bien de parois sensiblement verticales partiellement ou totalement discontinues l'une de l'autre, comme par exemple de parois munies de fentes sur une partie ou la totalité de leur hauteur, ladite hauteur étant définie par rapport à la base. Dans le cas d'une première pluralité de parois sensiblement verticales présentant une ou plusieurs discontinuités, le premier volume interne est défini par l'ensemble des parois sensiblement verticales constituant ladite première pluralité, les vides entre les parois étant remplacés par des parois imaginaires, le premier volume interne étant également défini par la base et par la partie supérieure correspondant au plan passant par le plus grand nombre de bords supérieurs des parois sensiblement verticales de la première pluralité de parois sensiblement verticales.

Par l'expression « solution aqueuse », on entend désigner une solution aqueuse contenant de l'urée ou de l'eau, préférentiellement de l'eau déminéralisée. Par l'expression « eau déminéralisée », on entend désigner une solution aqueuse ayant une conductivité électrique inférieure ou égale à 100 µS/cm à 25°C, voire inférieure ou égale à 50 µS/cm à 25°C, préférentiellement inférieure ou égale à 5 µS/cm à 25°C.

Les notions d'inférieur(es) ou de supérieur(es) sont définies par rapport à la localisation finale du dispositif de fixation au sein du véhicule et sont définies en prenant comme référence le sol. Un bord inférieur d'un élément étant plus proche du sol qu'un bord supérieur du même élément ou paroi.

La « au moins une paroi sensiblement verticale comprenant au moins un moyen de positionnement du stator de pompe et/ou un premier moyen de fixation du stator de pompe et/ou au moins un deuxième moyen de fixation du moyen de chauffage » peut être une paroi faisant partie de la première pluralité de parois sensiblement verticales par rapport à ladite base définissant au moins un premier volume interne ou bien être distincte de cette première pluralité de parois sensiblement verticales. Lorsque la paroi sensiblement verticale est distincte de la première pluralité de parois sensiblement verticales, ladite paroi sensiblement verticale peut avoir la forme d'un ergot en vue de son insertion dans une zone réceptacle dudit ergot au sein du stator de pompe. Alternativement, lorsque la paroi sensiblement verticale est distincte de la première pluralité de parois sensiblement verticales, ladite paroi sensiblement verticale peut avoir la forme d'une zone réceptacle apte à recevoir un ergot présent sur le stator de pompe.

Avantageusement, le dispositif de fixation pour module de distribution de solution aqueuse contenue dans un réservoir à bord d'un véhicule automobile selon l'invention est tel que le moyen de chauffage est choisi parmi une résistance chauffante, un élément chauffant de type CPT (Coefficient de Température Positif) et une boucle de circulation d'un fluide caloporteur, préférentiellement un élément chauffant de type CPT (Coefficient de Température Positif).

Ainsi, la boucle de circulation du fluide caloporteur permet d'amener une puissance importante avec un fluide « régulé » en température d'entrée (à maximum 120°C typiquement). Les CPT permettent d'intégrer une puissance élevée et de bénéficier de l'autorégulation en fonction de la température du module, de la solution aqueuse et du niveau de remplissage (pour éviter les risques de surchauffe et de dégradation de composants).

Selon un mode de réalisation préférentiel, le dispositif de fixation pour module de distribution de solution aqueuse contenue dans un réservoir à bord d'un véhicule automobile selon l'invention est tel qu'au moins un élément du stator de pompe est en contact avec le diffuseur de chaleur.

Ainsi, un tel mode de réalisation permet de récupérer l'énergie dissipée par l'échauffement de la pompe et de l'utiliser pour chauffer la solution aqueuse.

Par l'expression « au moins un élément du stator de pompe est en contact avec le diffuseur de chaleur », on entend désigner le fait qu'au moins un élément du stator de pompe touche le diffuseur de chaleur.

Selon un mode de réalisation préférentiel, le dispositif de fixation pour module de distribution de solution aqueuse contenue dans un réservoir à bord d'un véhicule automobile selon l'invention est tel que le stator de pompe, le moyen de chauffage et le diffuseur de chaleur comprenant une base et une première pluralité de parois sensiblement verticales par rapport à ladite base définissant au moins un premier volume interne, ladite base et/ou au moins une paroi sensiblement verticale comprenant au moins un premier moyen de fixation du stator de pompe et/ou au moins un deuxième moyen de fixation du moyen de chauffage, sont surmoulés par un matériau plastique.

Ainsi, un tel mode de réalisation permet d'une part de limiter le nombre de zones d'étanchéité et de fixation et d'autre part d'avoir les connexions électriques pour le stator et le moyen de chauffage en « zone sèche ».

Par l'expression « zone sèche », on entend désigner le fait que la solution aqueuse n'est pas présente dans ladite zone.

Selon un mode de réalisation préférentiel, le dispositif de fixation pour module de distribution de solution aqueuse contenue dans un réservoir à bord d'un véhicule automobile selon l'invention est tel qu'il comprend sur une partie extérieure un embout en communication fluidique avec le premier trou traversant apte à évacuer l'eau pompée par la pompe.

Ainsi, la présence de cet embout permet une fixation facilitée de la ligne d'injection de la solution aqueuse d'urée dans le cas d'un système de dépollution des gaz d'échappement de véhicule automobile ou bien d'eau dans le cas de l'injection d'eau dans la chambre de combustion d'un moteur thermique de véhicule automobile.

Selon un mode de réalisation préférentiel, le dispositif de fixation pour module de distribution de solution aqueuse contenue dans un réservoir à bord d'un véhicule automobile selon l'invention est tel que le deuxième moyen de fixation du moyen de chauffage est un réceptacle présent dans au moins une paroi sensiblement verticale du diffuseur de chaleur par rapport à la base, ledit réceptacle n'étant pas en contact avec la solution aqueuse.

Par le terme « réceptacle », on entend désigner le fait que le deuxième moyen de fixation du moyen de chauffage est apte à recevoir le moyen de chauffage. Le réceptacle peut être pourvu de moyen de guidage permettant une insertion aisée du moyen de chauffage. Un tel moyen de guidage peut être par exemple un système de glissière. Le réceptacle peut également comprendre un moyen de blocage empêchant un dégagement facile du moyen de chauffage hors du réceptacle. Le réceptacle peut se présenter sous forme de poche.

Ainsi, le moyen de chauffage peut être aisément assemblé, avant ou après le surmoulage.

Selon un mode de réalisation préférentiel, le dispositif de fixation pour module de distribution de solution aqueuse contenue dans un réservoir à bord d'un véhicule automobile selon l'invention est tel qu'une deuxième pluralité de parois sensiblement verticales par rapport à ladite base définit un deuxième volume interne, le deuxième volume interne étant inscrit dans le premier volume interne, ledit deuxième volume interne servant de logement au stator de pompe.

Par l'expression « une deuxième pluralité de parois sensiblement verticales par rapport à ladite base définit un deuxième volume interne », on entend désigner le fait que la base et la deuxième pluralité de parois sensiblement verticales par rapport à la base forment un contour dont la partie supérieure correspond au plan passant par le plus grand nombre de bords supérieurs des parois sensiblement verticales de la deuxième pluralité de parois sensiblement verticales, ledit contour définissant un deuxième volume interne en combinaison avec la base et la deuxième pluralité de parois sensiblement verticales. Ladite deuxième pluralité de parois sensiblement verticales peut être constituée de parois sensiblement verticales dans la continuité l'une de l'autre ou bien de parois sensiblement verticales partiellement ou totalement discontinues l'une de l'autre, comme par exemple de parois munies de fentes sur une partie ou la totalité de leur hauteur, ladite hauteur étant définie par rapport à la base. Préférentiellement, la deuxième pluralité de parois sensiblement verticales est constituée de parois sensiblement verticales dans la continuité l'une de l'autre. Dans le cas d'une deuxième pluralité de parois sensiblement verticales présentant une ou plusieurs discontinuités, le deuxième volume interne est défini par l'ensemble des parois sensiblement verticales constituant ladite deuxième pluralité, les vides entre les parois de la deuxième pluralité étant remplacés par des parois imaginaires, le deuxième volume interne étant également défini par la base et par la partie supérieure correspondant au plan passant par le plus grand nombre de bords supérieurs des parois sensiblement verticales de la deuxième pluralité de parois sensiblement verticales.

Ainsi, un tel mode de réalisation permet d'optimiser le pompage et le chauffage de la solution aqueuse. Dans un tel mode de réalisation, le stator de pompe est inséré en force dans le deuxième volume interne, les dimensions dudit stator de pompe étant telles que son volume est sensiblement égal audit deuxième volume interne.

Selon un mode de réalisation préférentiel, le dispositif de fixation pour module de distribution de solution aqueuse contenue dans un réservoir à bord d'un véhicule automobile selon l'invention est tel que la première pluralité de parois sensiblement verticales comprend au moins un logement apte à recevoir un raccordement pour une pompe à jet.

Ainsi, la pompe à jet permet de remplir le premier volume interne afin de garantir le pompage de la solution aqueuse.

Le « volume mort dynamique » est réduit grâce à l'utilisation des parois sensiblement verticales et de la pompe à jet. Par l'expression « volume mort dynamique », on entend désigner le volume de solution aqueuse non « puisable » dans le réservoir en conditions de roulage (lorsqu'il y a des mouvements de liquide vers les zones excentrées du réservoir). L'ajout d'un « bol » ou « piège » créé par la présence de la première pluralité de parois sensiblement verticales autour de la pompe permet de réduire ce volume mort dynamique par conservation d'une partie de la solution aqueuse dans ce « bol » ou « piège ».

Selon un mode de réalisation préférentiel, le dispositif de fixation pour module de distribution de solution aqueuse contenue dans un réservoir à bord d'un véhicule automobile selon l'invention est tel que la première pluralité de parois sensiblement verticales et/ou la base du diffuseur de chaleur comprend(nent) au moins un quatrième trou traversant de surmoulage.

Ainsi, le contact thermique entre le diffuseur et le matériau plastique est garanti grâce à un ancrage mécanique du plastique sur le diffuseur. Le quatrième trou traversant de surmoulage est uniquement destiné à une meilleure accroche mécanique entre la matière plastique et le diffuseur de chaleur. Le quatrième trou traversant de surmoulage n'est plus apparent une fois le surmoulage par la matière plastique réalisé et le dispositif de fixation pour module de distribution de solution aqueuse contenue dans un réservoir à bord d'un véhicule automobile formé.

Selon un mode de réalisation préférentiel, le dispositif de fixation pour module de distribution de solution aqueuse contenue dans un réservoir à bord d'un véhicule automobile selon l'invention est tel qu'il comprend un moyen de fixation audit réservoir, ledit moyen de fixation étant choisi parmi un trottoir de soudure, une interface camlock (en français, à raccord à came), un mason jar (en français, pot de type Mason), un assemblage mécanique avec joint, préférentiellement le moyen de fixation audit réservoir étant un trottoir de soudure.

Ainsi, la soudure via le trottoir de soudure permet de réduire le nombre de composants et donc de réduire les coûts, mais également d'obtenir un système plus compact, l'interface de soudure est également plus compacte qu'un assemblage mécanique.

Selon un mode de réalisation préférentiel, le dispositif de fixation pour module de distribution de solution aqueuse contenue dans un réservoir à bord d'un véhicule automobile selon l'invention est tel que le diffuseur de chaleur comprenant une base et une première pluralité de parois sensiblement verticales par rapport à ladite base définissant au moins un premier volume interne, le premier moyen de fixation du stator de pompe et le deuxième moyen de fixation du moyen de chauffage est une pièce monobloc.

Ainsi, le diffuseur est réalisé d'une seule pièce, ce qui réduit les coûts, simplifie le positionnement et le maintien dans le moule de surmoulage.

Selon un mode de réalisation préférentiel, le dispositif de fixation pour module de distribution de solution aqueuse contenue dans un réservoir à bord d'un véhicule automobile selon l'invention est tel que le diffuseur de chaleur comprenant une base et une première pluralité de parois sensiblement verticales par rapport à ladite base définissant au moins un premier volume interne est à base d'aluminium, préférentiellement en aluminium anodisé.

Par l'expression « à base d'aluminium », on entend désigner le fait que le diffuseur comprend au moins 50% en poids d'aluminium, préférentiellement 75% en poids d'aluminium, plus préférentiellement 90% en poids d'aluminium.

Ainsi, la conductivité thermique et les propriétés de mise en oeuvre du diffuseur sont optimisées.

Selon un mode de réalisation préférentiel, le dispositif de fixation pour module de distribution de solution aqueuse contenue dans un réservoir à bord d'un véhicule automobile selon l'invention est tel que le deuxième trou traversant apte à alimenter la pompe en solution aqueuse est localisé dans une partie supérieure de la première pluralité de parois sensiblement verticales par rapport à ladite base définissant au moins un premier volume interne. Préférentiellement, la périphérie du deuxième trou traversant est constituée des bords supérieurs de la première pluralité de parois sensiblement verticales par rapport à ladite base.

Ainsi, un tel mode de réalisation permet le débordement de la solution aspirée par la pompe à jet en fonctionnement, l'expansion de la glace lors du gel et le remplissage direct du premier volume interne lors du remplissage lorsque le moyen de remplissage débouche au-dessus du module.

Selon un mode de réalisation alternatif au mode précédent, le dispositif de fixation pour module de distribution de solution aqueuse contenue dans un réservoir à bord d'un véhicule automobile selon l'invention est tel que le deuxième trou traversant apte à alimenter la pompe en solution aqueuse est localisé sur une paroi de la première pluralité de parois sensiblement verticales par rapport à ladite base définissant au moins un premier volume interne.

Ainsi, un tel mode de réalisation permet d'assurer un niveau minimum de remplissage du module si le moyen de remplissage ne débouche pas au-dessus du module. La taille de l'orifice est déterminée afin de limiter le débit sortant du premier volume interne en fonctionnement, typiquement à environ 10 kg/h.

Selon un mode de réalisation préférentiel, le dispositif de fixation pour module de distribution de solution aqueuse contenue dans un réservoir à bord d'un véhicule automobile selon l'invention est tel qu'il comprend un troisième trou traversant apte à alimenter la pompe en solution aqueuse, ledit troisième trou traversant étant localisé sur une paroi de la première pluralité de parois sensiblement verticales par rapport à ladite base définissant au moins un premier volume interne.

Ainsi, ce troisième trou traversant peut être connecté sur la zone d'aspiration de la pompe à jet afin de faire rentrer la solution aqueuse située autour du premier volume interne dans le module.

Selon un mode de réalisation préférentiel, le dispositif de fixation pour module de distribution de solution aqueuse contenue dans un réservoir à bord d'un véhicule automobile selon l'invention est tel qu'il comprend un moyen de connexion électrique commun pour l'ensemble constitué du moyen de chauffage et de la pompe.

Ainsi, ce moyen de connexion peut être utilisé pour raccorder le module au circuit électrique du véhicule ce qui permet d'obtenir un encombrement et des coûts réduits.

Le matériau plastique de surmoulage est un matériau plastique sélectionné parmi le groupe de matériaux plastiques à base de polyoxyméthylène (POM), de polysulfure de phénylène (PPS), de polyamide (PA) tel que du polyphtalamide (PPA), de polyétheréthercétone (PEEK), de polyamide imide (PAI), de polyaryléthercétone (PAEK), de polycétone (PK) ou de polyoléfine, préférentiellement du polyéthylène (PE), plus préférentiellement du polyéthylène haute densité (HDPE). Lorsque le moyen de fixation du dispositif de fixation pour module de distribution de solution aqueuse contenue dans un réservoir à bord d'un véhicule automobile audit réservoir est un trottoir de soudure, le matériau plastique sélectionné sera un matériau compatible chimiquement avec le matériau plastique constituant le réservoir tel qu'une polyoléfine, préférentiellement du polyéthylène (PE), plus préférentiellement du polyéthylène haute densité (HDPE).

Par l'expression « groupe de matériaux plastiques à base de », on entend désigner le fait que le matériau plastique comprend au moins 50% en poids du matériau plastique sélectionné.

On entend par un matériau plastique « compatible chimiquement » avec un autre matériau plastique le fait que les matériaux plastiques comprennent chacun des espèces chimiques pouvant être soudées ensemble, sans nécessiter d'ajout de matière supplémentaire. En d'autres termes, des matériaux plastiques compatibles chimiquement sont aptes à se lier intimement entre eux par fusion, et à réaliser en particulier un enchevêtrement moléculaire de chaînes polymériques entre eux. Le soudage des deux matériaux plastiques est compris comme la mise en contact des deux matériaux plastiques de telle manière que le phénomène d'autohésion se produit à l'endroit du contact. Le phénomène d'autohésion se produit par l'apport de chaleur à l'endroit du contact. Une opération de soudure de deux matériaux sous l'action de la chaleur s'appelle un thermosoudage. Dans la suite, « soudage » est utilisé de manière synonyme avec « thermosoudage ».

Par « enchevêtrement moléculaire de chaînes polymériques » d'un matériau plastique et d'un autre matériau plastique, on comprend deux matériaux plastiques pressés ensemble de telle manière qu'un phénomène d'autohésion se produit. Une telle autohésion est le phénomène décrivant la diffusion intermoléculaire et l'enchevêtrement de chaînes moléculaires à travers une interface polymère formant une liaison forte. A la différence de l'adhésion, laquelle concerne l'énergie de surface (ou des liaisons chimiques secondaires entre deux matériaux soit similaires soit non similaires), l'autohésion concerne l'enchevêtrement de chaînes moléculaires et les liaisons secondaires pour des chaînes polymères de matériaux similaires, c'est-à-dire de matériaux compatibles chimiquement. Dans des conditions idéales, la diffusion est complète lorsque l'interface entre les deux matériaux polymères n'est plus discernable de la masse de chacun des deux matériaux polymères. Par exemple, concernant deux matériaux polymères thermoplastiques, une fois que le contact polymère thermoplastique - polymère thermoplastique est obtenu à l'interface, la diffusion intermoléculaire et l'enchevêtrement est nécessaire pour terminer le processus et former une bonne soudure. Un tel phénomène d'autohésion est par exemple décrit dans la publication « Plastics and Composites Welding Handbook », ISBN 1-56990-313-1, page 23.

Les notions de base, paroi sensiblement verticale et trou traversant sont communes au diffuseur de chaleur ainsi qu'au dispositif de fixation pour module de distribution de solution aqueuse contenue dans un réservoir à bord d'un véhicule automobile. Il convient toutefois de faire une distinction pour la notion de quatrième trou traversant qui est spécifique au diffuseur de chaleur, le(s)dit(s) trou(s) étant rempli(s) de matière plastique après surmoulage. Il est évident pour l'homme de l'art que certaine(s) paroi(s) sensiblement verticale(s) par rapport à la base présente dans le dispositif de fixation peut(vent) être absente(s) du diffuseur de chaleur inséré en son sein par surmoulage.

Un second objet de l'invention est de fournir un module de distribution de solution aqueuse contenue dans un réservoir à bord d'un véhicule automobile comprenant un dispositif de fixation selon l'invention, ledit module comprenant un rotor de pompe inséré au sein du stator de pompe.

Un troisième objet de l'invention concerne un réservoir comprenant un module de distribution de solution aqueuse contenue dans un réservoir à bord d'un véhicule automobile selon l'invention.

L'invention concerne également un procédé de fabrication d'un dispositif de fixation pour module de distribution de solution aqueuse contenue dans un réservoir à bord d'un véhicule automobile comprenant au moins les étapes de :
- Fabrication d'un diffuseur de chaleur comprenant une base et une première pluralité de parois sensiblement verticales par rapport à ladite base définissant au moins un premier volume interne ;
- Placement d'un stator de pompe au sein du premier volume interne ;
- Surmoulage, de préférence par un matériau plastique, de l'ensemble stator de pompe
- diffuseur de chaleur comprenant une base et une première pluralité de parois sensiblement verticales par rapport à ladite base définissant au moins un premier volume interne.

L'étape de fabrication du diffuseur de chaleur comprend une étape de mise en forme, cette dernière pouvant se faire par emboutissage, par pliage, par découpe et soudure ou bien par coulée sous pression. Préférentiellement, l'étape de mise en forme est effectuée par coulée sous pression.

L'étape de placement du stator au sein du premier volume interne peut comprendre une insertion du stator de pompe par montage en force, les dimensions du stator de pompe étant sensiblement égales aux dimensions du premier moyen de fixation du stator de pompe, plus particulièrement lorsque le premier moyen de fixation du stator de pompe correspond à une deuxième pluralité de parois sensiblement verticales par rapport à la base définissant un deuxième volume interne. Dans ce cas de figure, le moyen de positionnement du stator de pompe et le premier moyen de fixation du stator de pompe sont confondus et constitués d'une deuxième pluralité de parois sensiblement verticales par rapport à la base définissant un deuxième volume interne.

L'étape de surmoulage peut également comprendre le surmoulage du(es) moyen(s) de chauffage intégré(s) à l'ensemble stator de pompe - diffuseur de chaleur, le(s)dit(s) moyen(s) de chauffage étant placé dans le(s) réceptacle(s) prévu(s) à cet effet.

### Liste des figures

D'autres caractéristiques et avantages de l'invention apparaîtront plus clairement à la lecture de la description suivante d'un mode de réalisation préférentiel, donné à titre de simple exemple illustratif et non limitatif, et des dessins annexés, parmi lesquels :
[Fig. 1] la figure 1 présente un dispositif de fixation pour module de distribution de solution aqueuse contenue dans un réservoir à bord d'un véhicule automobile selon l'invention.
[Fig. 2] la figure 2 présente une vue latérale du dispositif de fixation pour module de distribution de solution aqueuse contenue dans un réservoir à bord d'un véhicule automobile selon l'invention présenté à la figure 1.
[Fig. 3] la figure 3 illustre un diffuseur de chaleur vu avant surmoulage par un matériau plastique, ledit diffuseur étant incorporé dans le dispositif de fixation pour module de distribution de solution aqueuse contenue dans un réservoir à bord d'un véhicule automobile selon l'invention tel que présenté aux figures 1 et 2.
[Fig. 4] la figure 4 décrit le diffuseur de chaleur de la figure 3 vu à partir de sa base.
[Fig. 5] la figure 5 présente un autre mode de réalisation du dispositif de fixation pour module de distribution de solution aqueuse contenue dans un réservoir à bord d'un véhicule automobile selon l'invention.
[Fig. 6] la figure 6 illustre un diffuseur de chaleur vu avant surmoulage par un matériau plastique, ledit diffuseur étant incorporé dans le dispositif de fixation pour module de distribution de solution aqueuse contenue dans un réservoir à bord d'un véhicule automobile selon l'invention tel que présenté en figure 5.
[Fig. 7] la figure 7 illustre une vue à partir de la base du diffuseur de chaleur de la figure 6.
[Fig. 8] la figure 8 présente une coupe transversale du dispositif de fixation pour module de distribution de solution aqueuse contenue dans un réservoir à bord d'un véhicule automobile selon l'invention présenté à la figure 5.

### Description d'au moins un mode de réalisation de l'invention

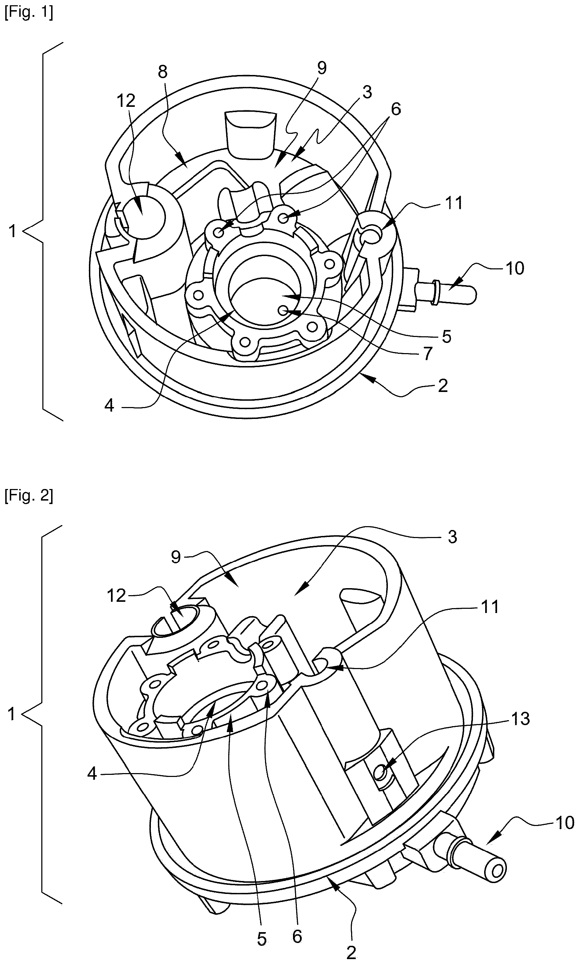

On présente, en relation avec la figure 1, un mode de réalisation d'un dispositif de fixation 1 pour module de distribution de solution aqueuse contenue dans un réservoir à bord d'un véhicule automobile selon l'invention. Le dispositif de fixation 1 comprend un moyen de fixation 2 au réservoir, ledit moyen de fixation 2 étant un trottoir de soudure. Le dispositif de fixation 1 comporte également au moins un premier volume interne 3 et un deuxième volume interne 4, le deuxième volume interne 4 comprenant le stator de pompe ainsi qu'une zone d'insertion du rotor de pompe 5 et des moyens de fixation dudit rotor de pompe 6. Le dispositif de fixation 1 comprend au moins un premier trou traversant 7 au niveau de la base 8 du dispositif de fixation, apte à évacuer la solution aqueuse pompée par la pompe et un deuxième trou traversant 9 apte à alimenter la pompe en solution aqueuse. Le premier trou traversant 7 est en communication fluidique avec une partie extérieure formant un embout 10. Le deuxième trou traversant 9 apte à alimenter la pompe en solution aqueuse est localisé dans une partie supérieure du premier volume interne, la périphérie du deuxième trou traversant 9 est constituée des bords supérieurs de la première pluralité de parois sensiblement verticales par rapport à la base 8. Le dispositif de fixation 1 comprend également un logement 11 apte à recevoir un raccordement pour une pompe à jet. Ce dernier peut également être muni d'un tube de mise au point 12 pour senseur de niveau.

La figure 2 présente une vue latérale du dispositif de fixation 1 pour module de distribution de solution aqueuse contenue dans un réservoir à bord d'un véhicule automobile selon l'invention présenté à la figure 1. On observe que le dispositif de fixation 1 comprend un moyen de fixation 2 au réservoir, ledit moyen de fixation 2 étant un trottoir de soudure. Le dispositif de fixation 1 comporte également au moins un premier volume interne 3 et un deuxième volume interne 4, le deuxième volume interne 4 comprenant le stator de pompe ainsi qu'une zone d'insertion du rotor de pompe 5 et des moyens de fixation dudit rotor de pompe 6. Un premier trou traversant 7 est en communication fluidique avec une partie extérieure formant un embout 10. Un deuxième trou traversant 9 permet l'alimentation de la pompe en solution aqueuse. Le deuxième trou traversant 9 apte à alimenter la pompe en solution aqueuse est localisé dans une partie supérieure du premier volume interne, la périphérie du deuxième trou traversant 9 est constituée des bords supérieurs de la première pluralité de parois sensiblement verticales par rapport à la base. Le dispositif de fixation 1 comprend également un logement 11 apte à recevoir un raccordement pour une pompe à jet. Ce dernier peut également être muni d'un tube de mise au point 12 pour senseur de niveau. Le dispositif de fixation 1 est également muni d'un troisième trou traversant 13 apte à alimenter la pompe en solution aqueuse, ledit troisième trou traversant 13 étant localisé sur une paroi de la première pluralité de parois sensiblement verticales par rapport à ladite base définissant le premier volume interne 3. Ce troisième trou traversant est connecté sur la zone d'aspiration de la pompe à jet afin de faire rentrer la solution aqueuse située autour du premier volume interne 3 dans le module.

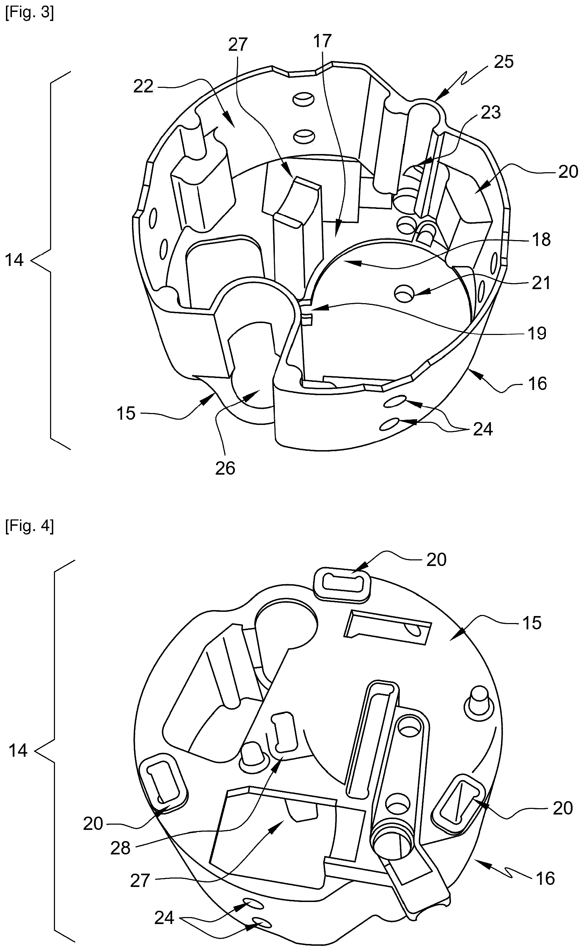

La figure 3 illustre un diffuseur de chaleur 14 vu avant surmoulage par un matériau plastique, ledit diffuseur de chaleur 14 étant incorporé dans le dispositif de fixation pour module de distribution de solution aqueuse contenue dans un réservoir à bord d'un véhicule automobile selon l'invention tel que présenté aux figures 1 et 2. Le diffuseur de chaleur 14 comprend une base 15 et une première pluralité de parois sensiblement verticales 16 par rapport à ladite base 15 définissant au moins un premier volume interne 17, ladite base 15 comprenant au moins un moyen de positionnement du stator de pompe 18 et un premier moyen de fixation du stator de pompe 19. Au moins une paroi sensiblement verticale 16 du diffuseur de chaleur 14 par rapport à la base 15 comprend au moins un deuxième moyen de fixation 20 du moyen de chauffage, le diffuseur de chaleur 14 comprend au moins un premier trou traversant 21, préférentiellement au niveau de la base 15 et un deuxième trou traversant 22. Le deuxième trou traversant 22 est localisé dans une partie supérieure du premier volume interne 17, la périphérie du deuxième trou traversant 22 est constituée des bords supérieurs de la première pluralité de parois sensiblement verticales 16 par rapport à la base 15. Le diffuseur de chaleur 14 est également muni d'un troisième trou traversant 23, ledit troisième trou traversant 23 étant localisé sur une paroi de la première pluralité de parois sensiblement verticales 16 par rapport à la base 15 définissant le premier volume interne 17. Le diffuseur de chaleur 14 est muni d'au moins un quatrième trou traversant de surmoulage 24, préférentiellement d'une pluralité de quatrième trou traversant de surmoulage 24, au niveau de la première pluralité de parois sensiblement verticales 16 et/ou de la base 15 du diffuseur de chaleur 14. La première pluralité de parois sensiblement verticales 16 par rapport à la base 15 comporte également un logement 25 apte à recevoir un raccordement pour une pompe à jet lorsque le diffuseur de chaleur est surmoulé, ledit logement 25 se présentant sous la forme d'une gorge. La première pluralité de parois sensiblement verticales comporte aussi un logement 26 apte à former un tube de mise au point pour senseur de niveau. Le diffuseur de chaleur 14 comporte également une troisième pluralité de parois sensiblement verticales 27 par rapport à la base 15, ladite troisième pluralité de parois sensiblement verticales 27 étant fermée par le haut et comprenant un quatrième moyen de fixation apte à servir de logement à un moyen de chauffage localisé près du stator de pompe.

La figure 4 décrit le diffuseur de chaleur 14 de la figure 3 vu à partir de sa base 15. La première pluralité de parois sensiblement verticales 16 comporte au moins un deuxième moyen de fixation 20 du moyen de chauffage. Le diffuseur de chaleur 14 comporte également une troisième pluralité de parois sensiblement verticales 27, ladite troisième pluralité de parois sensiblement verticales 27 étant fermée par le haut et comprenant un quatrième moyen de fixation 28 apte à servir de logement à un moyen de chauffage localisé près du stator de pompe. On observe que la première pluralité de parois sensiblement verticales 16 par rapport à la base 15 présente une pluralité de quatrième trou traversant de surmoulage 24.

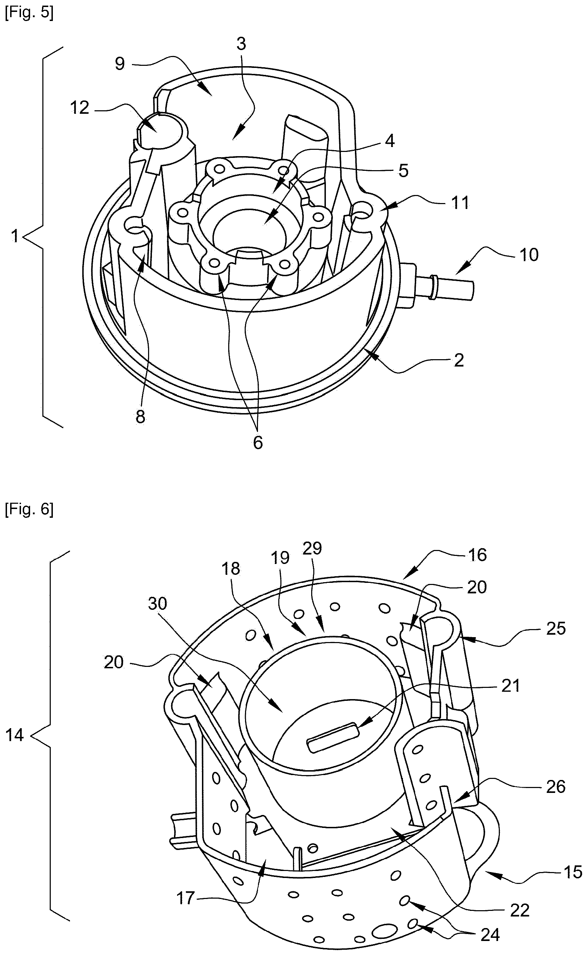

La figure 5 présente un autre mode de réalisation du dispositif de fixation 1 pour module de distribution de solution aqueuse contenue dans un réservoir à bord d'un véhicule automobile selon l'invention. Le dispositif de fixation 1 comprend un moyen de fixation 2 au réservoir, ledit moyen de fixation 2 étant un trottoir de soudure. Le dispositif de fixation 1 comporte également au moins un premier volume interne 3 et un deuxième volume interne 4, le deuxième volume interne 4 comprenant le stator de pompe ainsi qu'une zone d'insertion du rotor de pompe 5 et des moyens de fixation dudit rotor de pompe 6. Le dispositif de fixation 1 comprend au moins un premier trou traversant (non présenté sur la figure) au niveau de la base 8 du dispositif de fixation, apte à évacuer la solution aqueuse pompée par la pompe et un deuxième trou traversant 9 apte à alimenter la pompe en solution aqueuse. Le premier trou traversant est en communication fluidique avec une partie extérieure formant un embout 10. Le deuxième trou traversant 9 apte à alimenter la pompe en solution aqueuse est localisé dans une partie supérieure du premier volume interne, la périphérie du deuxième trou traversant 9 est constituée des bords supérieurs de la première pluralité de parois sensiblement verticales par rapport à la base 8. Le dispositif de fixation 1 comprend également un logement 11 apte à recevoir un raccordement pour une pompe à jet. Ce dernier peut également être muni d'un tube de mise au point 12 pour senseur de niveau.

La figure 6 illustre un diffuseur de chaleur 14 vu avant surmoulage par un matériau plastique, ledit diffuseur de chaleur 14 étant incorporé dans le dispositif de fixation pour module de distribution de solution aqueuse contenue dans un réservoir à bord d'un véhicule automobile selon l'invention tel que présenté à la figure 5. Le diffuseur de chaleur 14 comprend une base 15 et une première pluralité de parois sensiblement verticales 16 par rapport à ladite base 15 définissant au moins un premier volume interne 17, ladite base 15 comprenant au moins un moyen de positionnement du stator de pompe 18 et un premier moyen de fixation du stator de pompe 19. Le moyen de positionnement du stator de pompe 18 et le premier moyen de fixation du stator de pompe 19 sont confondus et constitué d'une deuxième pluralité de parois sensiblement verticales 29 par rapport à la base 15 définissant un deuxième volume interne 30, le deuxième volume interne étant inscrit dans le premier volume interne 17, ledit deuxième volume interne 30 servant de logement au stator de pompe. Au moins une paroi sensiblement verticale 16 du diffuseur de chaleur 14 comprend au moins un deuxième moyen de fixation 20 du moyen de chauffage, le diffuseur de chaleur 14 comprend au moins un premier trou traversant 21, préférentiellement au niveau de la base 15 et un deuxième trou traversant 22. Le deuxième trou traversant 22 est localisé dans une partie supérieure du premier volume interne 17, la périphérie du deuxième trou traversant 22 est constituée des bords supérieurs de la première pluralité de parois sensiblement verticales 16 par rapport à la base 15. Le diffuseur de chaleur 14 est muni d'au moins un quatrième trou traversant de surmoulage 24, préférentiellement d'une pluralité de quatrième trou traversant de surmoulage 24, au niveau de la première pluralité de parois sensiblement verticales 16 et/ou de la base 15 du diffuseur de chaleur 14. La première pluralité de parois sensiblement verticales 16 par rapport à la base 15 comporte également un logement 25 apte à recevoir un raccordement pour une pompe à jet lorsque le diffuseur de chaleur est surmoulé, ledit logement 25 se présentant sous la forme d'une gorge. La première pluralité de parois sensiblement verticales comporte aussi un logement 26 apte à former un tube de mise au point 12 pour senseur de niveau.

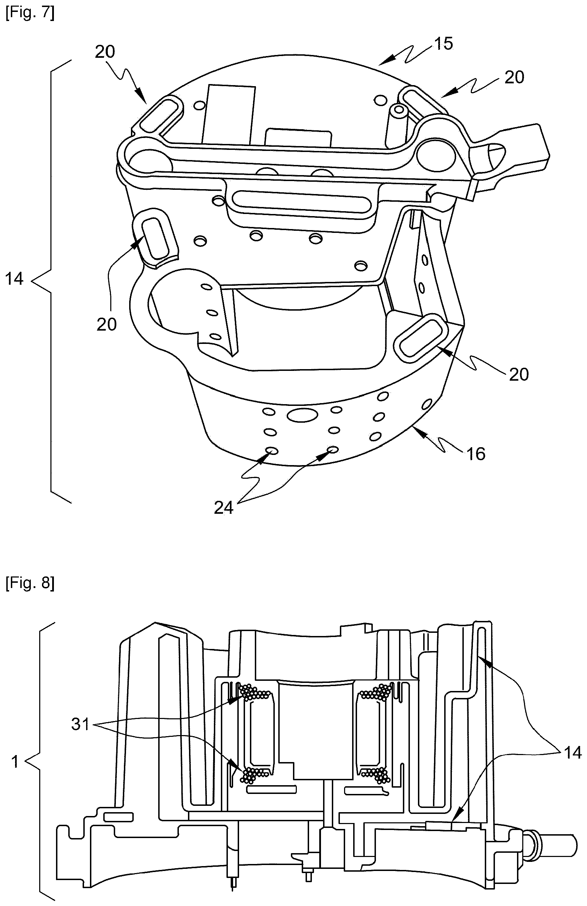

La figure 7 décrit le diffuseur de chaleur 14 de la figure 6 vu à partir de sa base 15. La première pluralité de parois sensiblement verticales 16 comporte au moins un deuxième moyen de fixation 20 du moyen de chauffage. On observe que la première pluralité de parois sensiblement verticales 16 par rapport à la base 15 présente une pluralité de quatrième trou traversant de surmoulage 24.

La figure 8 présente une coupe transversale du dispositif de fixation 1 pour module de distribution de solution aqueuse contenue dans un réservoir à bord d'un véhicule automobile selon l'invention présenté à la figure 5. Cette vue transversale du dispositif de fixation 1 illustre le surmoulage par la matière plastique du stator de pompe 31 et du diffuseur de chaleur 14.

## Revendications

1. Dispositif de fixation pour module de distribution de solution aqueuse contenue dans un réservoir à bord d'un véhicule automobile (1), ledit dispositif de fixation (1) comprenant un stator de pompe (31), un moyen de chauffage et un diffuseur de chaleur (14) comprenant une base (15) et une première pluralité de parois sensiblement verticales (16) par rapport à ladite base (15) définissant au moins un premier volume interne (3, 17), ladite base (15) et/ou au moins une paroi sensiblement verticale par rapport à la base (15) comprenant au moins un moyen de positionnement du stator de pompe (18) et/ou un premier moyen de fixation du stator de pompe (19) et/ou au moins un deuxième moyen de fixation (20) du moyen de chauffage le dispositif de fixation étant **caractérisé en ce que** l'ensemble stator de pompe (31) et diffuseur de chaleur (14) est surmoulé par un matériau plastique, le dispositif de fixation (1) comprenant au moins un premier trou traversant (21), préférentiellement au niveau de la base du dispositif de fixation (1), apte à évacuer la solution aqueuse pompée par la pompe et un deuxième trou traversant (22) apte à alimenter la pompe en solution aqueuse.

2. Dispositif de fixation (1) pour module de distribution de solution aqueuse contenue dans un réservoir à bord d'un véhicule automobile selon la revendication 1, tel que le moyen de chauffage est choisi parmi une résistance chauffante, un élément chauffant de type CPT (Coefficient de Température Positif) et une boucle de circulation d'un fluide caloporteur, préférentiellement un élément chauffant de type CPT (Coefficient de Température Positif).

3. Dispositif de fixation (1) pour module de distribution de solution aqueuse contenue dans un réservoir à bord d'un véhicule automobile selon une quelconque des revendications précédentes, tel que le deuxième moyen de fixation (20) du moyen de chauffage est un réceptacle présent dans au moins une paroi sensiblement verticale du diffuseur de chaleur (14) par rapport à la base (15), ledit réceptacle n'étant pas en contact avec la solution aqueuse.

4. Dispositif de fixation (1) pour module de distribution de solution aqueuse contenue dans un réservoir à bord d'un véhicule automobile selon une quelconque des revendications précédentes, tel qu'une deuxième pluralité de parois sensiblement verticales (29) par rapport à ladite base (15) définit un deuxième volume interne (30), le deuxième volume interne (30) étant inscrit dans le premier volume interne (3, 17), ledit deuxième volume interne (30) servant de logement au stator de pompe (31).

5. Dispositif de fixation pour module de distribution de solution aqueuse contenue dans un réservoir à bord d'un véhicule automobile selon une quelconque des revendications précédentes, tel que la première pluralité de parois sensiblement verticales (16) comprend au moins un logement apte à recevoir un raccordement pour une pompe à jet.

6. Dispositif de fixation (1) pour module de distribution de solution aqueuse contenue dans un réservoir à bord d'un véhicule automobile selon une quelconque des revendications précédentes, tel que la première pluralité de parois sensiblement verticales (16) et/ou la base (15) du diffuseur de chaleur comprend au moins un quatrième trou traversant de surmoulage (24).

7. Dispositif de fixation (1) pour module de distribution de solution aqueuse contenue dans un réservoir à bord d'un véhicule automobile selon une quelconque des revendications précédentes, tel qu'il comprend un moyen de fixation audit réservoir (2), ledit moyen de fixation (2) étant choisi parmi un trottoir de soudure, une interface à raccord à came, un pot de type Mason, un assemblage mécanique avec joint, préférentiellement le moyen de fixation audit réservoir étant un trottoir de soudure.

8. Dispositif de fixation pour module de distribution de solution aqueuse contenue dans un réservoir à bord d'un véhicule automobile selon une quelconque des revendications précédentes, tel que le diffuseur de chaleur (14) comprenant une base (15) et une première pluralité de parois sensiblement verticales (16) par rapport à ladite base (15) définissant au moins un premier volume interne (17), le premier moyen de fixation du stator de pompe (19) et le deuxième moyen de fixation (20) du moyen de chauffage est une pièce monobloc.

9. Dispositif de fixation (1) pour module de distribution de solution aqueuse contenue dans un réservoir à bord d'un véhicule automobile selon une quelconque des revendications précédentes, tel que le diffuseur de chaleur (14) comprenant une base (15) et une première pluralité de parois sensiblement verticales (16) par rapport à ladite base (15) définissant au moins un premier volume interne (17) est à base d'aluminium, préférentiellement en aluminium anodisé.

10. Module de distribution de solution aqueuse contenue dans un réservoir à bord d'un véhicule automobile comprenant un dispositif de fixation (1) selon une quelconque des revendications précédentes, ledit module comprenant un rotor de pompe inséré au sein du stator de pompe.

11. Réservoir de solution aqueuse comprenant un module selon la revendication 10.

12. Procédé de fabrication d'un dispositif de fixation (1) selon une quelconque des revendications 1 à 9, comprenant au moins les étapes de :
- Fabrication d'un diffuseur de chaleur (14) comprenant une base (15) et une première pluralité de parois sensiblement verticales (16) par rapport à ladite base définissant au moins un premier volume interne (17) ;
- Placement d'un stator de pompe (31) au sein du premier volume interne (17) ;
- Surmoulage, de préférence par un matériau plastique, de l'ensemble stator de pompe (31) - diffuseur de chaleur (14) comprenant une base (15) et une première pluralité de parois sensiblement verticales (16) par rapport à ladite base (15) définissant au moins un premier volume interne (17).

## Patentansprüche

1. Befestigungsvorrichtung für ein Modul zur Abgabe einer wässrigen Lösung, die in einem Tank an Bord eines Kraftfahrzeugs (1) enthalten ist, wobei die Befestigungsvorrichtung (1) aufweist: einen Pumpenstator (31), ein Heizmittel und einen Wärmediffusor (14), der eine Basis (15) und eine erste Mehrzahl von relativ zu der Basis (15) im Wesentlichen vertikalen Wänden (16), die wenigstens ein erstes Innenvolumen (3, 17) definiert, aufweist, wobei die Basis (15) und/oder wenigstens eine relativ zu der Basis (15) im Wesentlichen vertikale Wand wenigstens ein Mittel (18) zum Positionieren des Pumpenstators und/oder ein erstes Mittel (19) zum Befestigen des Pumpenstators und/oder wenigstens ein zweites Mittel (20) zum Befestigen des Heizmittels aufweisen, wobei die Befestigungsvorrichtung **dadurch gekennzeichnet ist, dass** die Anordnung aus Pumpenstator (31) und Wärmediffusor (14) mit einem Kunststoff umspritzt ist, wobei die Befestigungsvorrichtung (1) wenigstens eine erste Durchgangsbohrung (21), bevorzugt im Bereich der Basis der Befestigungsvorrichtung (1), aufweist, die geeignet ist, die von der Pumpe gepumpte wässrige Lösung abzuführen, und eine zweite Durchgangsbohrung (22) aufweist, die geeignet ist, der Pumpe wässrige Lösung zuzuführen.

2. Befestigungsvorrichtung (1) für ein Modul zur Abgabe einer wässrigen Lösung, die in einem Tank an Bord eines Kraftfahrzeugs enthalten ist, nach Anspruch 1, wobei das Heizmittel ausgewählt ist aus einem Heizwiderstand, einem Heizelement vom PTC (Positiver Temperaturkoeffizient)-Typ und einem Kreislauf für den Umlauf eines Wärmeträgerfluids, bevorzugt einem Heizelement vom PTC (Positiver Temperaturkoeffizient)-Typ.

3. Befestigungsvorrichtung (1) für ein Modul zur Abgabe einer wässrigen Lösung, die in einem Tank an Bord eines Kraftfahrzeugs enthalten ist, nach einem der vorhergehenden Ansprüche, wobei das zweite Mittel (20) zum Befestigen des Heizmittels ein Behältnis ist, das in wenigstens einer relativ zu der Basis (15) im Wesentlichen vertikalen Wand des Wärmediffusors (14) vorhanden ist, wobei das Behältnis mit der wässrigen Lösung nicht in Kontakt ist.

4. Befestigungsvorrichtung (1) für ein Modul zur Abgabe einer wässrigen Lösung, die in einem Tank an Bord eines Kraftfahrzeugs enthalten ist, nach einem der vorhergehenden Ansprüche, wobei eine zweite Mehrzahl von relativ zu der Basis (15) im Wesentlichen vertikalen Wänden (29) ein zweites Innenvolumen (30) definiert, wobei das zweite Innenvolumen (30) in das erste Innenvolumen (3, 17) eingepasst ist, wobei das zweite Innenvolumen (30) als Aufnahme für den Pumpenstator (31) dient.

5. Befestigungsvorrichtung für ein Modul zur Abgabe einer wässrigen Lösung, die in einem Tank an Bord eines Kraftfahrzeugs enthalten ist, nach einem der vorhergehenden Ansprüche, wobei die erste Mehrzahl von im Wesentlichen vertikalen Wänden (16) wenigstens eine Aufnahme aufweist, die zum Aufnehmen eines Anschlusselementes für eine Strahlpumpe geeignet ist.

6. Befestigungsvorrichtung (1) für ein Modul zur Abgabe einer wässrigen Lösung, die in einem Tank an Bord eines Kraftfahrzeugs enthalten ist, nach einem der vorhergehenden Ansprüche, wobei die erste Mehrzahl von im Wesentlichen vertikalen Wänden (16) und/oder die Basis (15) des Wärmediffusors wenigstens eine vierte Durchgangsbohrung (24) zum Umspritzen aufweist.

7. Befestigungsvorrichtung (1) für ein Modul zur Abgabe einer wässrigen Lösung, die in einem Tank an Bord eines Kraftfahrzeugs enthalten ist, nach einem der vorhergehenden Ansprüche, wobei sie ein Mittel zum Befestigen an dem Tank (2) aufweist, wobei das Mittel zum Befestigen (2) ausgewählt ist, aus einem Schweißsteg, einer Nockenanschlussschnittstelle, einem Mason-Topf, einer mechanischen Verbindung mit Dichtelement, wobei das Mittel zum Befestigen an dem Tank bevorzugt ein Schweißsteg ist.

8. Befestigungsvorrichtung für ein Modul zur Abgabe einer wässrigen Lösung, die in einem Tank an Bord eines Kraftfahrzeugs enthalten ist, nach einem der vorhergehenden Ansprüche, wobei der Wärmediffusor (14) eine Basis (15) und eine erste Mehrzahl von relativ zu der Basis (15) im Wesentlichen vertikalen Wänden (16), die wenigstens ein erstes Innenvolumen (17) definiert, aufweist, wobei das erste Mittel (19) zum Befestigen des Pumpenstators und das zweite Mittel (20) zum Befestigen des Heizmittels ein einstückiges Teil ist.

9. Befestigungsvorrichtung (1) für ein Modul zur Abgabe einer wässrigen Lösung, die in einem Tank an Bord eines Kraftfahrzeugs enthalten ist, nach einem der vorhergehenden Ansprüche, wobei der Wärmediffusor (14), der eine Basis (15) und eine erste Mehrzahl von relativ zu der Basis (15) im Wesentlichen vertikalen Wänden (16), die wenigstens ein erstes Innenvolumen (17) definiert, aufweist, auf Basis von Aluminium, bevorzugt aus eloxiertem Aluminium ist.

10. Modul zur Abgabe einer wässrigen Lösung, die in einem Tank an Bord eines Kraftfahrzeugs enthalten ist, aufweisend eine Befestigungsvorrichtung (1) nach einem der vorhergehenden Ansprüche, wobei das Modul einen Pumpenrotor aufweist, der in das Innere des Pumpenstators eingesetzt ist.

11. Tank für wässrige Lösung, aufweisend das Modul nach Anspruch 10.

12. Verfahren zur Herstellung einer Befestigungsvorrichtung (1) nach einem der Ansprüche 1 bis 9, aufweisend wenigstens die folgenden Schritte:
- Herstellen eines Wärmediffusors (14), der eine Basis (15) und eine erste Mehrzahl von relativ zu der Basis im Wesentlichen vertikalen Wänden (16), die wenigstens ein erstes Innenvolumen (17) definieren, aufweist;
- Platzieren eines Pumpenstators (31) im Inneren des ersten Innenvolumens (17);
- Umspritzen, vorzugsweise mit einem Kunststoff, der Anordnung aus Pumpenstator (31) und Wärmediffusor (14), der eine Basis (15) und eine erste Mehrzahl von relativ zu der Basis (15) im Wesentlichen vertikalen Wänden (16), die wenigstens ein erstes Innenvolumen (17) definieren, aufweist.

## Claims

1. Attachment device (1) for a module for dispensing an aqueous solution contained in a tank on board a motor vehicle, said attachment device (1) comprising a pump stator (31), a heating means and a heat diffuser (14) which comprises a base (15) and a first plurality of walls (16) that are substantially vertical with respect to said base (15) and define at least one first internal volume (3, 17), said base (15) and/or at least one wall that is substantially vertical with respect to the base (15) comprising at least one means (18) for positioning the pump stator and/or a first means (19) for attaching the pump stator and/or at least one second means (20) for attaching the heating means, the attachment device being **characterized in that** the pump stator (31) and heat diffuser (14) assembly is overmolded with a plastic material, the attachment device (1) comprising at least one first through-hole (21), preferably in the region of the base of the attachment device (1), suitable for discharging the aqueous solution pumped by the pump, and a second through-hole (22) suitable for supplying the pump with aqueous solution.

2. Attachment device (1) for a module for dispensing an aqueous solution contained in a tank on board a motor vehicle according to claim 1, such that the heating means is selected from a heating resistor, a heating element of the PTC type (Positive Temperature Coefficient) and a circulation loop for a heat transfer fluid, preferably a heating element of the PTC type (Positive Temperature Coefficient).

3. Attachment device (1) for a module for dispensing an aqueous solution contained in a tank on board a motor vehicle according to any one of the preceding claims, such that the second means (20) for attaching the heating means is a receptacle present in at least one wall of the heat diffuser (14) that is substantially vertical with respect to the base (15), said receptacle not being in contact with the aqueous solution.

4. Attachment device (1) for a module for dispensing an aqueous solution contained in a tank on board a motor vehicle according to any one of the preceding claims, such that a second plurality of walls (29) that are substantially vertical with respect to said base (15) defines a second internal volume (30), the second internal volume (30) being part of the first internal volume (3, 17), said second internal volume (30) serving as a housing for the pump stator (31).

5. Attachment device for a module for dispensing an aqueous solution contained in a tank on board a motor vehicle according to any one of the preceding claims, such that the first plurality of substantially vertical walls (16) comprises at least one housing suitable for receiving a connection for a jet pump.

6. Attachment device (1) for a module for dispensing an aqueous solution contained in a tank on board a motor vehicle according to any one of the preceding claims, such that the first plurality of substantially vertical walls (16) and/or the base (15) of the heat diffuser comprise at least one fourth overmolding through-hole (24).

7. Attachment device (1) for a module for dispensing an aqueous solution contained in a tank on board a motor vehicle according to any one of the preceding claims, such that it comprises means (2) for attachment to said tank, said attachment means (2) being selected from a welding track, a camlock interface, a Mason jar, or a mechanical assembly with a seal, the means for attachment to said tank preferably being a welding track.

8. Attachment device for a module for dispensing an aqueous solution contained in a tank on board a motor vehicle according to any one of the preceding claims, such that the heat diffuser (14), which comprises a base (15) and a first plurality of walls (16) that are substantially vertical with respect to said base (15) and define at least one first internal volume (17), the first means (19) for attaching the pump stator and the second means (20) for attaching the heating means, is made in one piece.

9. Attachment device (1) for a module for dispensing an aqueous solution contained in a tank on board a motor vehicle according to any one of the preceding claims, such that the heat diffuser (14), which comprises a base (15) and a first plurality of walls (16) that are substantially vertical with respect to said base (15) and define at least one first internal volume (17), is based on aluminum, preferably anodized aluminum.

10. Module for dispensing an aqueous solution contained in a tank on board a motor vehicle comprising an attachment device (1) according to any one of the preceding claims, said module comprising a pump rotor inserted within the pump stator.

11. Aqueous solution tank comprising a module according to claim 10.

12. Method for producing an attachment device (1) according to any one of claims 1 to 9, comprising at least the steps of:
- producing a heat diffuser (14) which comprises a base (15) and a first plurality of walls (16) that are substantially vertical with respect to said base and define at least one first internal volume (17);
- placing a pump stator (31) within the first internal volume (17);
- overmolding, preferably with a plastic material, the pump stator (31) and heat diffuser (14) assembly which comprises a base (15) and a first plurality of walls (16) that are substantially vertical with respect to said base (15) and define at least one first internal volume (17).
